(19)

Europäisches Patentamt
European Patent Office
Office européen des brevets

(11) **EP 3 587 375 A1**

(12) **EUROPEAN PATENT APPLICATION**
published in accordance with Art. 153(4) EPC

(43) Date of publication:
**01.01.2020 Bulletin 2020/01**

(21) Application number: **17897567.8**

(22) Date of filing: **08.11.2017**

(51) Int Cl.:
*C04B 28/02* [(2006.01)]  *C04B 24/26* [(2006.01)]
*C04B 24/38* [(2006.01)]

(86) International application number:
**PCT/JP2017/040217**

(87) International publication number:
**WO 2018/154863 (30.08.2018 Gazette 2018/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **22.02.2017 JP 2017031267**

(71) Applicant: Shin-Etsu Chemical Co., Ltd.
**Tokyo 100-0004 (JP)**

(72) Inventors:
• **YAMAKAWA, Tsutomu
Joetsu-shi
Niigata 942-8601 (JP)**

• **TAMAKI, Shinji
Gamagori-shi
Aichi 443-8611 (JP)**
• **YAMAZAKI, Miki
Gamagori-shi
Aichi 443-8611 (JP)**
• **OKADA, Kazuhisa
Gamagori-shi
Aichi 443-8611 (JP)**

(74) Representative: **Teipel, Stephan et al
Lederer & Keller
Patentanwälte Partnerschaft mbB
Unsöldstrasse 2
80538 München (DE)**

(54) **CONCRETE COMPOSITION AND METHOD FOR PREPARING SAME**

(57) Provided is a concrete composition made up of a binder, water, a fine aggregate, a coarse aggregate, and a one-component admixture, in which a water/binder ratio is 30 to 70% by mass, a slump flow value is 35 to 75 cm, and a one-component admixture using four specific components and water is contained in a proportion of 0.5 to 3.0 parts by mass relative to 100 parts by mass of the binder.

EP 3 587 375 A1

**Description**

Technical Field

The present invention relates to a concrete composition and a method for preparing the same. More specifically, the present invention relates to a concrete composition with high fluidity as well as improved material separation resistance, and a method for preparing such a concrete composition.

Background Art

In recent years, there have been increasing cases of using a concrete composition with high fluidity, such as a medium-flow concrete composition (a slump flow value of about 35 to 50 cm) or a high-flow concrete composition (a slump flow value of about 50 cm or more), so as to improve the workability and save labor. One example is a lining concrete of a tunnel, and by using a highly fluid concrete composition in placing in a narrow space with poor workability, it is possible to improve the workability and save labor of compaction due to its high filling property. However, such a highly fluid concrete composition tends to cause separation of a material such as an aggregate. The material separation causes degradation in pumpability and quality of the concrete composition.

Conventionally, for improving the material separation as described above, it has been proposed that a fine powder such as limestone fine powder be added to a concrete composition (see, for example, Patent Document 1), and that powdered cellulose ether or gums such as diutan gum and welan gum, be added as a thickener (see, for example, Patent Documents 2 and 3). However, the conventional means as in Patent Documents 1 to 3 have a problem of separately requiring a storage silo, a weighing operation, and the like.

Conventionally, for improving the material separation and improving the workability as described above, it has also been proposed to use a one-component admixture obtained by being made to one liquid, with a water reducing agent or the like, cellulose ether which is one of the few water-soluble polymers that can be thickened even in a strong alkaline environment due to cement (see, for example, Patent Documents 4 and 5). In the one-component admixture, the stability of active ingredients such as a thickening component and a water-reducing component is very important for stabilizing the properties and physical properties of the concrete composition. However, the combination with the water reducing agent as in Patent Document 4 has a problem where the cellulose ether is easily salted out and the stability of the one-component admixture is lost in a short period of time. Further, the conventional means of stabilizing the cellulose ether in a liquid by increasing the liquid viscosity with specific gums as described in Patent Document 5 has improved the stability of the one-component admixture, but has a problem where the application of means to all the generally marketed water reducing agents may be difficult and it is necessary to select a water-reducing component with low solid content concentration. When a water-reducing component with a low solid content concentration is selected, the water-reducing performance of the one-component admixture degrades and an additive amount increases especially in preparation of highly fluid concrete compositions, thereby causing degradation in manufacturing efficiency of the concrete composition such as being unable to perform measurement at once with a scale at a concrete manufacturing factory.

Citation List

Patent Documents

    [Patent Document 1] JP-A-10-29849
    [Patent Document 2] JP-A-4-139047
    [Patent Document 3] JP-A-2011-509908
    [Patent Document 4] JP-A-2008-137889
    [Patent Document 5] JP-A-2016-56081

Summary of the Invention

Problem to be Solved by the Invention

The problems to be solved by the present invention lies in providing a concrete composition and a method for preparing the concrete composition which simultaneously satisfies 1) to 3) below: 1) high fluidity; 2) little separation of materials such as aggregate; and 3) using a one-component admixture with a water-reducing component having a correspondingly high solid content concentration and having high stability.

Means for Solving the Problem

As a result of intensive studies to solve the above problems, the present inventors found a concrete composition correctly suitable, the concrete composition obtained by using a specific one-component admixture in combination of a specific component A, a specific component B, a specific component C, and a specific component D as admixtures in highly fluid concrete composition.

That is, the present invention relates to a concrete composition and a method for preparing the concrete composition. The concrete composition is made up of a binder, water, fine aggregate, coarse aggregate, and a one-component admixture. A water/binder ratio is 30 to 70% by mass, a slump flow value is 35 to 75 cm, and a one-component admixture is contained in a proportion of 0.5 to 3.0 parts by mass relative to 100 parts by mass of a binder.

One-component admixture: a one-component admixture that contains the following component A, the following component B, the following component C, and the following component D and has an ionic strength, derived from the following component A, of 0.02 to 0.8.

Component A: a polycarboxylic acid-based water reducing agent made up of a copolymer of an unsaturated monocarboxylic acid monomer and/or an unsaturated dicarboxylic acid monomer and/or salts of these monomers and an unsaturated monomer that is copolymerizable with these monomers and salts and has a (poly)oxyalkylene group composed of 1 to 300 oxyalkylene units having 2 to 4 carbon atoms in a molecule, and/or a salt of the copolymer

Component B: water-soluble cellulose ether

Component C: gums

Component D: defoamer

The concrete composition according to the present invention includes a binder, water, fine aggregate, coarse aggregate, and a one-component admixture, in which a water/binder ratio is 30 to 70% by mass, and a slump flow value is 35 to 75 cm.

When the water/binder ratio is less than 30% by mass, or when the slump flow value is less than 35 cm, excessive viscosity is imparted to such a concrete composition to cause degradation in construction properties, which is not preferred. Conversely, when the water/binder ratio is more than 70% by mass, or when the slump flow value is more than 75 cm, sufficient material separation resistance cannot be imparted to such a concrete composition, and a desired concrete composition cannot be obtained.

In order to prepare the desired concrete composition and obtain hardened concrete body, the water/binder ratio is set to 30 to 70% by mass and the slump flow value is set to 35 to 75 cm, and preferably, the water/binder ratio is set to 40 to 65% by mass and the slump flow value is set to 45 to 70 cm.

Examples of the binder used in the concrete composition according to the present invention include various types of Portland cement such as ordinary Portland cement, moderate-heat Portland cement, low-heat Portland cement, high-early-strength Portland cement, ultra-high-early-strength Portland cement, and sulfate-resistant Portland cement, various mixed types of cement such as blast-furnace cement and fly-ash cement, fly ash, a blast-furnace slag fine powder, a limestone fine powder, a stone powder, silica fume, and an expander.

Examples of the fine aggregate used in the concrete composition according to the present invention include river sand, mountain sand, land sand, silica sand, crushed sand, and blast-furnace slag fine aggregate.

Examples of the coarse aggregate used in the concrete composition according to the present invention include river gravel, mountain gravel, land gravel, crushed stone, and blast furnace slag coarse aggregate.

The one-component admixture used in the concrete composition according to the present invention is a one-component admixture containing a specific component A, a specific component B, a specific component C, and a specific component D.

The polycarboxylic acid-based water reducing agent of the component A is made up of a copolymer of an unsaturated monocarboxylic acid monomer and/or an unsaturated dicarboxylic acid monomer and/or salts of these monomers and an unsaturated monomer that is copolymerizable with these monomers and salts and has a polyoxyalkylene group composed of 1 to 300 oxyalkylene units having 2 to 4 carbon atoms in a molecule and/or a salt of the copolymer.

The concentration of the component A in the one-component admixture is not particularly limited but is preferably 15 to 50% by mass, and more preferably 15 to 40% by mass. When the concentration of the component A is excessively low, the water-reducing performance of the one-component admixture degrades and an additive amount increases especially in preparation of highly fluid concrete compositions, thereby causing degradation in manufacturing efficiency of the concrete composition such as being unable to perform measurement at once with a scale at a concrete manufacturing factory, and causing an increase in transportation cost. Conversely, when the concentration of the component A is excessively high, the cellulose ether tends to salt out.

In the one-component admixture, the ionic strength derived from polycarboxylic acid-based water reducing agent as the component A is 0.02 to 0.8, but is preferably 0.05 to less than 0.5. The polycarboxylic acid-based water reducing agent exhibits water reducing property with a carboxyl group in the structure as an adsorption point to the binder, and hence the ionic substance is essential. On the other hand, the water-soluble cellulose ether cannot be dissolved when the concentration of the ionic substance reaches a certain level or higher, whereby a phenomenon of precipitation (salting-out) occurs, and the water-soluble cellulose ether settles out without stabilization. Therefore, eliminating the ionic substance that does not contribute to water reducing property and reducing the ionic strength of the water reducing agent are very important for improving the stability of the one-component admixture. Examples of the ionic substance that does not contribute to water reducing property include a polymerization initiator and an alkali metal salt used for neutralization. In the present invention, the ionic strength is represented by Formula 1 below, and for all ion species in the water reducing agent, the ionic strength is calculated by adding the product of a mass molar concentration $m_i$ and the square of a charge $z_i$ in the one-component admixture of each ion and further multiplying the obtained value by 1/2.

[Formula 1]

$$I = 1 / 2 \sum_i m_i z_i^2$$

In Formula 1,

I: ionic strength

$m_i$: mass molar concentration (mol·kg$^{-1}$)

$z_i$: charge

Examples of the unsaturated monocarboxylic acid monomers and/or the unsaturated dicarboxylic acid monomers and/or salts thereof that will form the polycarboxylic acid-based water reducing agent of the component A include one selected from (meth)acrylic acid, crotonic acid, maleic acid (anhydride), itaconic acid (anhydride), fumaric acid, and salts thereof, but from the viewpoint of stabilization in the one-component admixture of water-soluble cellulose ether, a state of acid rather than salt is preferred.

The salts of the unsaturated monocarboxylic acid monomers and/or the unsaturated dicarboxylic acid monomers are not particularly limited, but examples of the salts include alkali metal salts such as sodium salt and potassium salt, alkali earth metal salts such as calcium salt and magnesium salt, ammonium salts, and amine salts such as diethanolamine salt and triethanolamine salt.

Examples of the unsaturated monomer, which is copolymerizable with the unsaturated monocarboxylic acid monomer, and/or the unsaturated dicarboxylic acid monomer, and/or the salts of thereof and has a (poly)oxyalkylene group composed of 1 to 300 oxyalkylene units having 2 to 4 carbon atoms in the molecule include α-allyl-ω-methoxy-(poly)oxyethylene, α-allyl-ω-methoxy-(poly)oxyethylene (poly)oxypropylene, α-allyl-ω-hydroxy-(poly)oxyethylene, α-allyl-ω-hydroxy-(poly)oxyethylene (poly)oxypropylene, α-methallyl-ω-hydroxy-(poly)oxyethylene, α-methallyl-ω-methoxy-(poly)oxyethylene, α-methallyl-ω-hydroxy-(poly)oxyethylene (poly)oxypropylene, α-methallyl-co-acetyl-(poly)oxyethylene, α-(3-methyl-3-butenyl)-ω-hydroxy-(poly)oxyethylene, α-(3-methyl-3-butenyl)-ω-hydroxy-(poly)oxyethylene (poly)oxypropylene, α-(3-methyl-3-butenyl)-ω-butoxy-(poly)oxyethylene, α-(3-methyl-3-butenyl)-co-acetyl-(poly)oxyethylene (poly)oxypropylene, α-acryloyl-ω-hydroxy-(poly)oxyethylene, α-acryloyl-ω-hydroxy-(poly)oxypropylene, α-acryloyl-ω-methoxy-(poly)oxyethylene, α-acryloyl-ω-methoxy-(poly)oxyethylene (poly)oxypropylene, α-acryloyl-co-butoxy-(poly)oxyethylene, α-methacryloyl-ω-hydroxy-(poly)oxyethylene, α-methacryloyl-co-hydroxy-(poly)oxyethylene (poly)oxypropylene α-methacryloyl-ω-methoxy-(poly)oxyethylene, α-methacryloyl-ω-butoxy-(poly)oxyethylene, α-methacryloyl-co-acetyl-(poly)oxyethylene (poly)oxypropylene, polyamidepolyamine (poly)oxyethylene, polyamidepolyamine (poly)oxyethylene (poly)oxypropylene, α-vinyl-ω-hydroxy (poly)oxybutylene (poly)oxyethylene.

The copolymer and/or the salt thereof used as the polycarboxylic acid-based water reducing agent of the component A can be synthesized by a known method. Examples of these include radical polymerization using water as a solvent, radical polymerization using an organic solvent as a solvent, and radical polymerization without a solvent. The radical polymerization initiator used for radical polymerization is not limited in type so long as being one that decomposes at a polymerization reaction temperature to generate radicals, like peroxides such as benzoyl peroxide, hydrogen peroxide, ammonium persulfate, sodium persulfate, and potassium persulfate, and azo compounds such as 2,2'-azobisisobutyronitrile and 2,2'-azobis (2-methylbutyronitrile). However, from the viewpoint of the ionic strength, one that produces no ionic substance even after decomposition, such as hydrogen peroxide, is preferred. In addition, reducing agents such as sodium bisulfite, sodium bisulfate, and ascorbic acid, and amine compounds such as ethylenediamine and glycine can be used in combination as promoters. A chain transfer agent can also be used to bring the mass average molecular weight of the obtained water-soluble vinyl polymer and/or a salt thereof into a desired range.

The mass average molecular weight of the copolymer of the component A is preferably 2000 to 500,000, and more preferably 10,000 to 100,000.

The copolymer of the component A can be one obtained by copolymerizing other monomers within a range not impairing the effect of the present invention, but the copolymerization ratio thereof is preferably 20% by mass or less and more preferably 10% by mass or less.

Examples of the other monomers include styrene and acrylamide.

The water-soluble cellulose ether of the component B is non-ionic, and in terms of preventing separation of a material of a hydraulic composition, improving durability by reduction of bleeding, and reducing variation in strength and quality, the following are preferably used: alkyl celluloses such as methyl cellulose and ethyl cellulose, hydroxyalkyl celluloses such as hydroxypropyl cellulose and hydroxyethyl cellulose, and hydroxyalkyl alkyl celluloses such as hydroxyethyl methyl cellulose, hydroxypropyl methyl cellulose, and hydroxyethyl ethyl cellulose.

Specifically, examples of the alkyl cellulose include methyl cellulose having a DS of preferably 1.0 to 2.2 and more preferably 1.2 to 2.0, and ethyl cellulose having a DS of preferably 1.0 to 2.2 and more preferably 1.2 to 2.0. Examples of the hydroxyalkyl cellulose include hydroxyethyl cellulose having an MS of preferably 0.1 to 3.0 and more preferably 0.5 to 2.8, and hydroxypropyl cellulose having an MS of preferably 0.05 to 3.3 and more preferably 0.1 to 3.0. Example of the hydroxyalkyl alkyl cellulose include: hydroxyethyl methyl cellulose having a DS of preferably 1.0 to 2.2 and more preferably 1.2 to 2.0 and an MS of preferably 0.05 to 0.6 and more preferably 0.10 to 0.5, hydroxypropyl methyl cellulose having a DS of preferably 1.0 to 2.2 and more preferably 1.2 to 2.0 and MS of preferably 0.05 to 0.6 and more preferably 0.10 to 0.5; and hydroxyethyl ethyl cellulose having a DS of preferably 1.0 to 2.2 and more preferably 1.2 to 2.0 and an MS of preferably 0.05 to 0.6 and more preferably 0.10 to 0.5.

Note that the DS is the degree of substitution and the number of alkoxyl groups present per glucose ring unit of cellulose, and MS represents the molar substitution and is the average number of moles of hydroxyalkoxyl groups added per glucose ring unit of cellulose.

The DS and the MS can be determined by converting a value measured by the substitution degree analysis method for hypromellose (hydroxypropyl methyl cellulose) described in the seventeenth revised edition of Japanese Pharmacopoeia.

The viscosity of the water-soluble cellulose ether of the component B in a 2% by mass or 1% by mass aqueous solution at 20°C is, at 20 rpm in a BH-type viscometer, preferably 30 (2% by mass) to 30000 (1% by mass) mPa·s, more preferably 80 (2% by mass) to 25000 (1% by mass) mPa·s, and still more preferably 350 (2% by mass) to 20000 (1% by mass) mPa·s, from the viewpoint of imparting a predetermined viscosity to the concrete composition. In addition, the viscosity of the water-soluble cellulose ether was measured using the 1% by mass aqueous solution when the viscosity exceeds 50000 mPa·s in the 2% by mass aqueous solution.

The proportion of the water-soluble cellulose ether in the one-component admixture is not particularly limited but is preferably 0.05 to 10% by mass and more preferably 0.1 to 5% by mass.

The gums of the component C are effective in stabilizing the water-soluble cellulose ether in the one-component admixture. The type of the gums is not particularly limited, but such gums include at least one selected from diutan gum, welan gum, xanthan gum, and gellan gum.

As described above, the water-soluble cellulose ether of the component B cannot be dissolved when the concentration of the ionic substance reaches a certain level or higher, whereby a phenomenon of precipitation (salting-out) occurs, and the water-soluble cellulose ether settles out without stabilization. In the one-component admixture of the present invention, the sedimentation of the water-soluble cellulose ether can be controlled by appropriately controlling the ionic strength, and further excellent stabilization can be realized by increasing the viscosity of a solution which is a dispersion medium according to Stokes theorem. As a result of examining various water-soluble polymers, the present inventors have found that, among gums, gums selected from diutan gum, welan gum, xanthan gum, and gellan gum have the above property more.

In general, the admixture for concrete is stored as allowed to stand for an indefinite period of time after manufacturing until it is added to the concrete composition. In the one-component admixture containing the salted out water-soluble cellulose ether, the water-soluble cellulose ether settles out to a lower part, and even when added to the concrete composition, a desired effect cannot be obtained, and the properties and physical properties of the concrete composition become unstable. On the other hand, in the one-component admixture in which the ionic strength is properly controlled and gums are added, the water-soluble cellulose ether is a uniform aqueous solution that is not salted out, thereby making it possible to provide a stable concrete composition at all times.

Diutan gum is made up of D-glucose, D-glucuronic acid, D-glucose, L-rhamnose, and two L-rhamnoses, and as commercially available products, for example, KELCO-CRETE DG-F (trade name of CP Kelco Inc.) can be used. Welan gum has a structure in which L-rhamnose or L-mannose side chain is bound to a main chain obtained by binding D-glucose, D-glucuronic acid, and L-rhamnose in a ratio of 2:2: 1. As commercially available products, for example, CP KELCO KIA-96 (trade name of CP Kelco Inc.) can be used. Similar to cellulose, the main chain of xanthan gum is a β-1,4 bond of D-glucose, the side chain is made up of two mannoses and one glucuronic acid, and as a commercially available product, for example, KELZAN (trade name of SANSHO Co., Ltd.) can be used. Gellan gum is a heteropolysaccharide taking as a repeating unit four sugars obtained by combining D-glucose, D-glucuronic acid, and L-rhamnose in a ratio of 2: 1: 1, and as a commercially available product, for example, KELCOGEL AFT (trade name of CP Kelco Inc.) can be used.

The proportion of the gums in the one-component admixture is not particularly limited, but in the case of diutan gum, the proportion thereof is preferably 0.005 to 2% by mass, more preferably 0.01 to 1% by mass, and still more preferably 0.02 to 0.8% by mass. In the case of welan gum, xanthan gum, and gellan gum, the proportion thereof is preferably 0.005 to 10% by mass, more preferably 0.01 to 5% by mass, and still more preferably 0.02 to 3% by mass.

As a defoamer of the component D, oxyalkylene type, silicone type, alcohol type, mineral oil type, fatty acid type, fatty acid ester type, and the like are used in terms of stabilization of the water-soluble cellulose ether in one-component admixture.

Examples of the oxyalkylene defoamer include: polyoxyalkylenes such as (poly)oxyethylene (poly)oxypropylene adduct; (poly)oxyalkylene alkyl ethers such as diethylene glycol heptyl ether, polyoxyethylene oleyl ether, polyoxypropylene butyl ether, polyoxyethylene polyoxypropylene 2-ethylhexyl ether, and oxyethylene oxypropylene adducts to higher alcohols having 8 or more carbon atoms and secondary alcohols having 12 to 14 carbon atoms; (poly)oxyalkylene (alkyl) aryl ethers such as polyoxypropylene phenyl ether and polyoxyethylene nonylphenyl ether; acetylene ethers obtained by addition-polymerizing alkylene oxide to acetylene alcohols such as 2,4,7,9-tetramethyl-5-decyne-4,7-diol, 2,5-dimethyl-3-hexyne-2, 5-diol, 3-methyl-1-butyne-3-ol; (poly)oxyalkylene fatty acid esters such as diethylene glycol oleate ester, diethylene glycol lauryl ester, and ethylene glycol distearate ester; (poly)oxyalkylene sorbitan fatty acid esters such as polyoxyethylene sorbitan monolaurate and polyoxyethylene sorbitan trioleate ester; (poly)oxyalkylene alkyl (aryl) ether sulfate ester salts such as sodium polyoxypropylene methyl ether sulfate and sodium polyoxyethylene dodecylphenol ether sulfate; (poly)oxyalkylene alkyl phosphates esters such as (poly)oxyethylene stearyl phosphate ester; (poly)oxyalkylene alkyl amines such as polyoxyethylene lauryl amine; and polyoxyalkylene amides.

Examples of the silicone defoamers include dimethyl silicone oil, silicone paste, silicone emulsion, organic modified polysiloxane, and fluorosilicone oil.

Examples of the alcohol defoamers include octyl alcohol, 2-ethylhexyl alcohol, hexadecyl alcohol, acetylene alcohol, and glycols.

Examples of the mineral oil-based defoamers include kerosene and liquid paraffin.

Examples of the fatty acid defoamer include oleic acid, stearic acid, and alkylene oxide adducts thereof.

Examples of the fatty acid ester defoamer include glycerin monoricinolate, alkenyl succinic acid derivative, sorbitol monolaurate, sorbitol trioleate, and natural wax.

As the defoamer of the component D, the oxyalkylene defoamer, the mineral oil-based defoamer, and the fatty acid ester defoamer are preferred from the viewpoint of dispersion stability of the one-component water reducing agent.

The proportion of the defoamer in the one-component admixture is not particularly limited but is preferably 0.001 to 10% by mass and more preferably 0.005 to 5% by mass. Hence the sedimentation of the water-soluble cellulose ether due to salting-out can be reduced by adding the defoamer in an amount equal to or more than the additive amount (generally 5 to 10% by mass relative to the water-soluble cellulose ether) of the defoamer necessary for suppressing or breaking foaming of the water-soluble cellulose ether. The reason for this is presumed to be that some component (surfactant) in the defoamer is adsorbed on and stabilize the surface of the salted out water-soluble cellulose ether.

The concrete composition according to the present invention contains the one-component admixture described above in a proportion of 0.5 to 3.0% by mass relative to 100 parts by mass of the binder.

To the extent that the effects of the present invention are not impaired, the concrete composition according to the present invention can be used in combination, as need, with an AE modifier made of an anionic surfactant, for example, a defoamer made of a polyoxyalkylene alkyl ether, for example, a setting retarder made of an oxycarboxylate, for example, a curing accelerator made of amines, for example, a preservative made of an isothiazoline compound, for example, a waterproofing agent made of a higher fatty acid derivative, for example, a corrosion inhibitor made of nitrite, for example, and some other agent.

The method of preparing a concrete composition according to the present invention is a method for preparing the concrete composition according to the present invention described above, using a binder, water, fine aggregate, coarse aggregate, and a one-component admixture. A one-component admixture prepared by adding powdered gums and/or an aqueous solution of the gums as the component C is used when the ionic strength derived from the component A is less than 0.02 to 0.5, and the one-component admixture prepared by adding the aqueous solution of the gums as the component C is used when the ionic strength derived from the component A is 0.5 to 0.8.

The gums of the component C may be added either in the form of a powder or an aqueous solution, but the addition as an aqueous solution improves the stability of the one-component admixture. It is thus preferable to add welan gum, xanthan gum, and gellan gum in an aqueous solution. However, considering the manufacturing efficiency, it is preferable to prepare a one-component admixture by adding powdered gums and/or an aqueous solution thereof when the ionic strength of the component A is 0.02 to less than 0.5, and it is preferable to prepare a one-component admixture by adding the aqueous solution of the gums when the ionic strength of the component A is 0.5 to 0.8.

Effect of the Invention

According to the present invention, it is possible to provide a concrete composition and a method for preparing the concrete composition which simultaneously satisfies 1) to 3) below: 1) high fluidity; 2) little separation of materials such as aggregate; and 3) using a one-component admixture with a water-reducing component having a correspondingly high solid content concentration and having high stability.

In order to make the configuration and effects of the present invention more specific, examples will be given below, but the present invention is not limited to these examples. In the following examples, "%" will mean "% by mass" unless otherwise stated.

(Example)

Test Division 1 (synthesis of component A as polycarboxylic acid-based water reducing agent)

·Synthesis of polycarboxylic acid-based water reducing agent (a-4)

A reaction vessel was charged with 1400 g of water, 1100 g of methoxypoly (45 mol) ethylene glycol monomethacrylate, 104 g of methacrylic acid, 24 g of thioglycerol as a chain transfer agent, and 50 g of a 30% aqueous solution of sodium hydroxide, the atmosphere in the reaction vessel is replaced with nitrogen, and thereafter the mixture was gradually warmed while stirring. The temperature of the reaction system was kept at 60°C in a warm water bath, and 240 g of a 0.025% aqueous solution of hydrogen peroxide was added to initiate radical polymerization reaction. After the lapse of 2 hours, 60 g of a 0.025% aqueous solution of hydrogen peroxide was further added, and the radical polymerization reaction was continued for 6 hours. To the obtained copolymer, 3,182 g of water and 121 g of a 30% aqueous solution of sodium hydroxide were added to obtain a 20% aqueous solution of the component A (a-4). The component A (a-4) was analyzed to find that its mass average molecular weight was 41,400 (GPC method, calculated as pullulan).

Synthesis of component A (a-6), (a-8), and (a-9)

The component A (a-6), (a-8), and (a-9) listed in Table 1 are synthesized in the same manner as the component A (a-4) to obtain aqueous solutions of (a-6), (a-8), and (a-9).

·Synthesis of component A (a-7)

The reaction vessel was charged with $\alpha$-allyl-$\omega$-methoxy-poly (100 mol) ethylene glycol poly (3 mol) propylene glycol and maleic anhydride, the atmosphere in a reaction vessel is replaced with nitrogen, and thereafter the mixture was gradually warmed while stirring, to be dissolved uniformly. The temperature of the reaction system was kept at 80°C in a warm water bath, and azobisisobutyronitrile was added to initiate radical polymerization reaction. After the lapse of 2 hours, azobisisobutyronitrile was further added, and the radical polymerization reaction was continued for 2 hours. To the obtained copolymer, water and a 30% aqueous solution of sodium hydroxide were added to obtain an aqueous solution of the component A (a-7). The component A (a-7) was analyzed to find that its mass average molecular weight was 69,200 (GPC method, calculated as pullulan).

·Synthesis of component A (a-10)

The reaction vessel was charged with water and 3-methyl-3-buten-1-ol poly (80 mol) ethylene glycol adduct, the atmosphere in the reaction vessel was replaced with nitrogen, and thereafter, the mixture was gradually warmed while stirred. The temperature of the reaction system was kept at 70°C in a warm water bath to stabilize the temperature. Thereafter, acrylic acid was dropped over 3 hours. Simultaneously, an aqueous solution, in which thioglycollic acid and L-ascorbic acid were dissolved in water, and a 5% hydrogen peroxide solution were each dropped over 3 hours to initiate radical polymerization reaction After the lapse of 1 hour from the end of the dropping, water and a 30% aqueous solution of sodium hydroxide were added to the obtained copolymer to obtain an aqueous solution of the component A (a-10). The component A (a-10) was analyzed to find that its mass average molecular weight was 71,300 (GPC method, in terms of pullulan).

·Synthesis of component A (ar-1) and (ar-2)

In the same manner as in the component A (a-4), aqueous solutions of the components A (ar-1) and (ar-2) listed in Table 1 were obtained.

The contents of the components A (a-1) to (a-10) and (ar-1) to (ar-3) synthesized above were summarized in Table 1. Each of the aqueous solutions of the components A (a-1) to (a-3) and (a-5) was prepared by diluting the aqueous solution of the component A (a-6) with water, and the aqueous solution of the component A (ar-3) was prepared by diluting the aqueous solution of the component A (ar-2) with water.

[Table 1]

| Type of component A | Type of monomer | | Mass average molecular weight |
| --- | --- | --- | --- |
| | Monomer 1 | Monomer 2 | |
| a-1 | methacrylic acid, sodium methacrylate | methoxy-poly (9 mol) ethylene glycol monomethacrylate | 31000 |
| a-2 | methacrylic acid, sodium methacrylate | methoxy-poly (9 mol) ethylene glycol monomethacrylate | 31000 |
| a-3 | methacrylic acid, sodium methacrylate | methoxy-poly (9 mol) ethylene glycol monomethacrylate | 31000 |
| a-4 | sodium methacrylate | methoxy-poly (45 mol) ethylene glycol monomethacrylate | 41400 |
| a-5 | methacrylic acid, sodium methacrylate | methoxy-poly (9 mol) ethylene glycol monomethacrylate | 31000 |
| a-6 | methacrylic acid, sodium methacrylate | methoxy-poly (9 mol) ethylene glycol monomethacrylate | 31000 |
| a-7 | maleic acid, sodium maleate | $\alpha$-allyl-$\omega$-methoxy-poly (100 mol) ethylene glycol poly (3 mol) propylene glycol | 69200 |
| a-8 | methacrylic acid | methoxy-poly (23 mol) ethylene glycol monomethacrylate | 38200 |
| a-9 | methacrylic acid, sodium methacrylate | methoxy-poly (23 mol) ethylene glycol monomethacrylate | 36800 |
| a-10 | acrylic acid, sodium acrylate | 3-methyl-3-buten-1-ol poly (80 mol) ethylene glycol adduct | 71300 |
| ar-1 | acrylic acid | methoxy-poly (23 mol) ethylene glycol monomethacrylate, hydroxyethyl acrylate | 49900 |
| ar-2 | sodium methacrylate | methoxy-poly (23 mol) ethylene glycol monomethacrylate | 32100 |
| ar-3 | sodium methacrylate | methoxy-poly (23 mol) ethylene glycol monomethacrylate | 32100 |

In Table 1,

Aqueous solutions of a-1 to a-3 and a-5: The aqueous solution of a-6 was diluted with water.

Aqueous solution of ar-3: The aqueous solution of ar-2 was diluted with water.

Mass average molecular weight: GPC method, calculated as pullulan

Test Division 2 (other materials used)

Component B used: The contents of the water-soluble cellulose ether were summarized in Table 2.

Component C used: The contents of the gums were summarized in Table 3.

Component D used: As a defoamer, SN-DEFOAMER 14-HP (oxyalkylene defoamer, trade name of SAN NOPCO LIMITED), abbreviated as d-1, was used.

[Table 2]

| No. | Name of water-soluble cellulose ether | DS | MS | Aqueous solution viscosity (mPa·s) |
|---|---|---|---|---|
| b-1 | hydroxypropyl methyl cellulose | 1.8 | 0.19 | 30500 |
| b-2 | hydroxyethyl methyl cellulose | 1.4 | 0.18 | 29800 |
| b-3 | hydroxyethyl cellulose | - | 2.50 | 31300 |

In Table 2,
Viscosity (mPa · s): viscosity of 2% by mass aqueous solution at 20°C

[Table 3]

| No. | Name of gums |
|---|---|
| c-1 | xanthan gum |
| c-2 | welan gum |
| c-3 | diutan gum |
| c-4 | gellan gum |

In Table 3,

c-1: KELZAN (trade name of SANSHO Co., Ltd.)

c-2: CP Kelco. K1A96 (trade name of CP Kelco Inc.)

c-3: KELCO-CRETE DG-F (trade name of CP Kelco Inc.)

c-4: KELCOGEL AFT (trade name of CP Kelco Inc.)

Test Division 3 (preparation of one-component admixture)

(When component C is used in powder)

•Preparation of one-component admixture (e-1)

The component A, the component B, and the component C, listed in Tables 1 to 3, the component D, and the water were blended in proportions shown in Table 5 and mixed using a homomixer (HM-310, manufactured by AS ONE Corporation) at 5000 rpm for one minute to prepare a one-component admixture (e-1).

•Preparation of one-component admixtures (e-2) to (e-7), (e-9) and (e-11)

One-component admixtures (e-2) to (e-7), (e-9), and (e-11) were prepared in the same manner as the one-component admixture (e-1).

•Preparation of one-component admixtures (er-1) to (er-3), (er-5), and (er-6)

One-component admixtures (er-1) to (er-3), (er-5), and (er-6) were prepared in the same manner as the one-component admixture (e-1).
(When component C is used in aqueous solution)

·Preparation of one-component admixture (e-8)

Water and the component C were blended and mixed using the homomixer (HM-310, manufactured by AS ONE Corporation) at 5000 rpm for 1 minute to prepare a 2% aqueous solution of the component C. Thereafter, a one-component admixture (e-8) was prepared in the same manner as the one-component admixture (e-1).

•Preparation of one-component admixture (e-10) and (e-12)

One-component admixtures (e-10) and (e-12) were prepared in the same manner as the one-component admixture (e-8).

•Preparation of one-component admixtures (er-4) and (er-7)

One-component admixtures (er-4) and (er-7) were prepared in the same manner as the one-component admixture (e-4).
The contents of the one-component admixtures (e-1) to (e-12) and (er-1) to (er-7) prepared above were summarized in Table 5.

Test Division 4 (calculation of ionic strength)

The ionic strength derived from the component A (a-4) in each one-component admixture prepared in Test Division 3 was calculated to be 0.206 according to Formula 1 described above. The calculation process and the like are shown in Table 4.

[Table 4]

| Type of ionic substance | Ion species | | Mass molar concentration $(mol \cdot kg^{-1})$ | Calculation formula of Formula 1 | Ionic strength | Total of ion strengths |
|---|---|---|---|---|---|---|
| | Type | Charge | | | | |
| sodium sulfate | sulfate ion | 2 | 0.006 | $1/2 \times 0.006 \times 2^2$ | 0.012 | 0.206 |
| | sodium ion | 1 | 0.012 | $1/2 \times 0.012 \times 1^2$ | 0.006 | |
| sodium methacrylate | carboxylate ion | 1 | 0.188 | $1/2 \times 0.188 \times 1^2$ | 0.094 | |
| | sodium ion | 1 | 0.188 | $1/2 \times 0.188 \times 1^2$ | 0.094 | |

The ionic strengths derived from the components A (a-1) to (a-3), (a-5) to (a-10), and (ar-1) to (ar-3) were calculated in the same manner as the ionic strength derived from the component A (a-4). The calculation results of the ionic strength derived from the component A in each one-component admixture were summarized in Table 5.

[Table 5]

| Type of one-component admixture | Mixed form of component C | Composition of one-component admixture | | | | | | | | | Concentration of component A in one-component admixture (%) | Ionic strength derived from component A in one-component admixture |
|---|---|---|---|---|---|---|---|---|---|---|---|---|
| | | Component A | | Component B | | Component C | | Component D | | Water | | |
| | | Type | (g) | Type | (g) | Type | (g) | Type | (g) | (g) | | |
| e-1 | powder | a-1 | 160 | b-1 | 5.000 | c-2 | 1.500 | d-1 | 1.500 | 840 | 15.9 | 0.111 |
| e-2 | powder | a-2 | 200 | b-1 | 7.500 | c-1 | 0.625 | d-1 | 1.875 | 800 | 19.8 | 0.139 |
| e-3 | powder | a-3 | 225 | b-1 | 7.031 | c-3 | 3.094 | d-1 | 1.125 | 775 | 22.2 | 0.156 |
| e-4 | powder | a-4 | 200 | b-1 | 12.500 | c-2 | 5.000 | d-1 | 2.500 | 800 | 19.6 | 0.206 |
| e-5 | powder | a-5 | 300 | b-1 | 9.375 | c-3 | 2.813 | d-1 | 2.813 | 700 | 29.6 | 0.207 |
| e-6 | powder | a-6 | 360 | b-1 | 10.125 | c-3 | 3.375 | d-1 | 4.500 | 640 | 35.4 | 0.248 |
| e-7 | powder | a-7 | 200 | b-2 | 12.500 | c-1 | 3.750 | d-1 | 3.750 | 800 | 19.6 | 0.459 |
| e-8 | aqueous solution | a-7 | 200 | b-2 | 14.000 | c-1 | 3.000 | d-1 | 3.000 | 800 | 19.6 | 0.459 |
| e-9 | powder | a-8 | 200 | b-3 | 7.500 | c-4 | 0.625 | d-1 | 1.875 | 800 | 19.8 | 0.041 |
| e-10 | aqueous solution | a-9 | 200 | b-1 | 18.000 | c-1 | 10.000 | d-1 | 12.000 | 800 | 19.2 | 0.559 |
| e-11 | powder | a-9 | 200 | b-1 | 14.000 | c-1 | 10.000 | d-1 | 16.000 | 800 | 19.2 | 0.559 |
| e-12 | aqueous solution | a-10 | 200 | b-2 | 5.625 | c-3 | 1.875 | d-1 | 2.500 | 800 | 19.8 | 0.762 |
| er-1 | powder | a-3 | 225 | b-1 | 12.500 | - | - | d-1 | 2.500 | 775 | 22.2 | 0.156 |
| er-2 | powder | a-3 | 225 | b-1 | 12.500 | c-2 | 5.000 | - | - | 775 | 22.1 | 0.155 |
| er-3 | powder | ar-1 | 200 | b-1 | 6.250 | c-2 | 1.875 | d-1 | 1.875 | 800 | 19.8 | 0.012 |
| er-4 | aqueous solution | ar-2 | 200 | b-1 | 11.250 | c-1 | 3.750 | d-1 | 5.000 | 800 | 19.6 | 0.836 |
| er-5 | powder | ar-3 | 100 | b-2 | 6.250 | c-3 | 1.250 | d-1 | 2.500 | 900 | 9.9 | 0.423 |
| er-6 | powder | *1 | 410 | b-1 | 14.000 | c-1 | 10.000 | d-1 | 16.000 | 590 | 39.4 | - |
| er-7 | aqueous solution | *2 | 250 | b-1 | 18.000 | c-1 | 10.000 | d-1 | 12.000 | 750 | 24.0 | - |

In Table 5,

* 1: alkylallyl sulfonate high condensate (high-performance water reducing agent for concrete, manufactured by TAKEMOTO OIL & FAT Co., Ltd, trade name: Paul Fine 510 AN)
* 2: nitrogen-containing sulfonate (high-performance water reducing agent for concrete, manufactured by TAKEMOTO OIL & FAT Co., Ltd, trade name: Paul Fine MF)

Test Division 5 (stability test of one-component admixture)

After 100 ml of the one-component admixture prepared in the test division 3 is collected in a measuring cylinder equipped with a stopper cock, the mixture was allowed to stand in an environment of 20°C and 40°C, and the sedimentation volume of the water-soluble cellulose ether was measured. The sedimentation volume was evaluated as follows: the state of uniform dispersion without salting-out was taken as 100%, a transparent portion begins to appear gradually on the top of the measuring cylinder as time passes, and a scale of the measuring cylinder of the boundary between the transparent portion and a dispersed portion is read. For example, when the scale of the measuring cylinder of the boundary between the transparent portion and the dispersed portion after seven days is 90 ml, the sedimentation volume is 90%. The measurement results were summarized in Table 6.

[Table 6]

| Type of one-component admixture | Sedimentation volume (%) | | | | | |
|---|---|---|---|---|---|---|
| | 20°C | | | 40°C | | |
| | 7 days | 14 days | 28 days | 7 days | 14 days | 28 days |
| e-1 | 100 | 100 | 100 | 100 | 100 | 100 |
| e-2 | 100 | 100 | 100 | 100 | 100 | 97 |
| e-3 | 100 | 100 | 99 | 100 | 100 | 98 |
| e-4 | 100 | 100 | 100 | 100 | 100 | 98 |
| e-5 | 100 | 99 | 97 | 100 | 98 | 97 |
| e-6 | 100 | 97 | 96 | 98 | 96 | 95 |
| e-7 | 100 | 99 | 99 | 99 | 97 | 95 |
| e-8 | 100 | 100 | 100 | 100 | 100 | 99 |
| e-9 | 100 | 100 | 99 | 100 | 98 | 98 |
| e-10 | 99 | 97 | 96 | 97 | 95 | 95 |
| e-11 | 98 | 93 | 88 | 95 | 87 | 81 |
| e-12 | 96 | 89 | 86 | 92 | 83 | 80 |
| er-1 | 88 | 83 | 55 | 72 | 51 | 38 |
| er-2 | 93 | 85 | 82 | 79 | 62 | 49 |
| er-4 | 71 | 58 | 30 | 51 | 21 | 21 |
| er-6 | 44 | 32 | 21 | 19 | 19 | 18 |
| er-7 | 32 | 32 | 28 | 20 | 20 | 20 |

Test Division 6 (stability evaluation of one-component admixture)

Based on the measurement results of Table 6, the one-component admixtures of the respective examples were evaluated as follows, and the results were summarized in Table 7.

-Evaluation of stability

Evaluation was performed based on the following criteria.

⊙: sedimentation volume (%) after standing for 28 days is 95 to 100%

○: sedimentation volume (%) after standing for 28 days is 80 or more and less than 95%

×: sedimentation volume (%) after standing for 28 days is less than 80%

[Table 7]

| Type of one-component admixture | Stability of one-component admixture (28 days) | |
| --- | --- | --- |
| | 20°C | 40°C |
| e-1 | ⊙ | ⊙ |
| e-2 | ⊙ | ⊙ |
| e-3 | ⊙ | ⊙ |
| e-4 | ⊙ | ⊙ |
| e-5 | ⊙ | ⊙ |
| e-6 | ⊙ | ⊙ |
| e-7 | ⊙ | ⊙ |
| e-8 | ⊙ | ⊙ |
| e-9 | ⊙ | ⊙ |
| e-10 | ⊙ | ⊙ |
| e-11 | ○ | ○ |
| e-12 | ○ | ○ |
| er-1 | × | × |
| er-2 | ○ | × |
| er-4 | × | × |
| er-6 | × | × |
| er-7 | × | × |

Test Division 7 (preparation of concrete composition)

•Examples 1 to 19 and Comparative Examples 1 to 8

The contents were mixed for 90 seconds according to the contents listed in Table 8 and Table 9 by using a 60-liter forced twin screw mixer to prepare concrete compositions of the respective examples listed in Table 9. Note that the one-component admixture was prepared 10 times the amount used 28 days before the test and allowed to stand at 20°C, and the upper 70% or more supernatant was used unless otherwise stated. In addition, for the concrete composition of each example, the target air content was 4.5±1.0%, using an AE agent (trade name AE-300, manufactured by Takemoto Oil & Fats Co., Ltd.) and a defoamer (trade name AFK-2, manufactured by Takemoto Fat & Oil Co., Ltd.), and the target slump flow value was 60±5 cm.

[Table 8]

| Blend No. | Water/binder ratio (%) | Fine aggregate rate (%) | Unit amount of concrete composition $(kg/m^3)$ | |
| --- | --- | --- | --- | --- |
| | | | Water | Binder |
| 1 | 40 | 51 | 165 | 413 |
| 2 | 50 | 54 | 170 | 340 |
| 3 | 60 | 57 | 175 | 292 |

In Table 8,

Fine aggregate: land sand from Oi River system (surface dry density 2.57g/cm$^3$)
Coarse aggregate: crushed stone from Okazaki (surface dry density 2.66g/cm$^3$)

Test Division 8 (physical property test of prepared concrete composition)

The slump flow value immediately after mixing, the air content, and the bleeding rate were measured as follows for the prepared concrete compositions of each example, and the results were summarized in Table 9.

- Slump flow (cm): The concrete composition immediately after mixing was measured according to JIS-A1150.
- Air content (% by volume): The concrete composition immediately after mixing was measured according to JIS-A1128.
- Bleeding rate (%): A concrete composition was collected immediately after mixing and measured in accordance with JIS-A1123.

[Table 9]

| Division | Blend No. | Type of binder | One-component admixture | | Physical properties of concrete composition | | |
|---|---|---|---|---|---|---|---|
| | | | Type | Additive amount (%) | Slump flow value (cm) | Air content (%) | Bleeding rate (%) |
| Example 1 | 1 | f-1 | e-2 | 1.20 | 61.5 | 4.6 | 2.1 |
| | 2 | 1 | f-2 | e-3 | 1.15 | 60.0 | 4.4 | 1.9 |
| | 3 | 1 | f-1 | e-10 | 1.35 | 62.0 | 4.5 | 2.7 |
| | 4 | 2 | f-1 | e-1 | 1.60 | 59.5 | 4.4 | 2.9 |
| | 5 | 2 | f-1 | e-2 | 1.25 | 58.5 | 4.2 | 3.0 |
| | 6 | 2 | f-1 | e-3 | 1.10 | 59.0 | 4.4 | 2.9 |
| | 7 | 2 | f-1 | e-4 | 1.25 | 60.0 | 4.6 | 2.5 |
| | 8 | 2 | f-1 | e-5 | 0.85 | 59.5 | 4.4 | 2.8 |
| | 9 | 2 | f-1 | e-6 | 0.70 | 58.5 | 4.2 | 2.9 |
| | 10 | 2 | f-1 | e-7 | 1.30 | 60.5 | 4.7 | 2.4 |
| | 11 | 2 | f-2 | e-7 | 1.15 | 60.5 | 4.7 | 2.7 |
| | 12 | 2 | f-1 | e-8 | 1.30 | 60.0 | 4.5 | 2.6 |
| | 13 | 2 | f-1 | e-9 | 2.30 | 62.0 | 4.3 | 3.2 |
| | 14 | 2 | f-1 | e-10 | 1.55 | 59.0 | 4.5 | 2.1 |
| | 15 | 2 | f-1 | e-11 | 1.45 | 63.5 | 4.8 | 2.8 |
| | 16 | 2 | f-1 | e-12 | 1.15 | 59.5 | 4.6 | 3.8 |
| | 17 | 3 | f-1 | e-8 | 1.40 | 59.0 | 4.4 | 5.4 |
| | 18 | 3 | f-2 | e-10 | 1.50 | 62.0 | 4.4 | 5.0 |
| | 19 | 3 | f-1 | e-12 | 1.25 | 61.0 | 4.5 | 6.2 |
| Comparative Example 1 | 1 | f-1 | er-1 | 1.05 | 60.0 | 4.5 | 7.2 |
| | 2 | 1 | f-1 | *3 | 2.05 | 63.5 | 4.4 | 1.6 |
| | 3 | 2 | f-1 | er-2 | 1.15 | 58.0 | 4.3 | 3.8 |
| | 4 | 2 | f-1 | er-3 | 5.00 | 38.0 | 4.6 | - |
| | 5 | 2 | f-1 | er-4 | 1.25 | 61.0 | 4.2 | 10.1 |
| | 6 | 2 | f-1 | er-5 | 3.20 | 60.0 | 4.4 | 2.5 |
| | 7 | 3 | f-1 | er-6 | 2.00 | 58.5 | 4.4 | 13.8 |
| | 8 | 3 | f-1 | er-7 | 3.25 | 62.0 | 4.0 | 14.2 |

In Table 9,

Blend No.: blend No. listed in Table 8

f-1: ordinary Portland cement

f-2: blast furnace cement type B

One-component admixtures: admixtures listed in Table 5

* 3: The one-component admixture (er-1) was extracted from the bottom of the storage container and used.

Additive amount: ratio of one-component admixture to 100 parts by mass of binder (parts by mass)

Comparative Example 4: Even when 5.0% of the one-component admixture was added, the target fluidity could not be obtained.

Test Division 9 (evaluation of dispersion performance of one-component admixture)

Based on the measurement results of Table 9, the dispersion performance of the one-component admixture was evaluated as follows, and the results were summarized in Table 10.

•Evaluation of dispersion performance of one-component admixture

The concrete composition immediately after mixing was evaluated based on the following criteria by the addition ratio of the one-component admixture for obtaining the target slump flow value.

⊙: The addition ratio of the one-component admixture is less than 2.00 parts by mass relative to 100 parts by mass of the binder
○: The addition ratio of the one-component admixture is 2.00 to 3.00 parts by mass relative to 100 parts by mass of the binder
×: The addition ratio of the one-component admixture is more than 3.00 parts by mass relative to 100 parts by mass of the binder

Test Division 10 (physical property evaluation of prepared concrete composition)

Based on the measurement results of Table 9, the material separation resistance of the concrete composition of each example was evaluated as follows using the bleeding ratio and the sense of material integrity as indexes, and the results were summarized in Table 10.

•Evaluation of bleeding rate

(40% water binder ratio)

○: The bleeding rate is 4.0% or less
×: The bleeding rate exceeds 4.0%

(50% water binder ratio)

○: The bleeding rate is 6.0% or less

×: The bleeding rate exceeds 6.0%

(60% water binder ratio)

○: The bleeding rate is 8.0% or less

×: The bleeding rate exceeds 8.0%

•Evaluation of sense of material integrity of concrete composition

With respect to the concrete composition, the sense of material integrity was visually evaluate based on the following criteria.

⊙: very good (no separation of aggregate and mortar paste)

○: good (slight separation of aggregate and mortar paste)

×: bad (apparent separation of aggregate and mortar paste)

[Table 10]

| Division | Dispersion performance of one-component admixture | Material separation resistance of concrete composition | |
|---|---|---|---|
| | | Bleeding rate | Sense of material integrity |
| Example 1 | ⊙ | ○ | ⊙ |
| 2 | ⊙ | ○ | ⊙ |
| 3 | ⊙ | ○ | ○ |
| 4 | ⊙ | ○ | ⊙ |
| 5 | ⊙ | ○ | ⊙ |
| 6 | ⊙ | ○ | ⊙ |
| 7 | ⊙ | ○ | ⊙ |
| 8 | ⊙ | ○ | ⊙ |
| 9 | ⊙ | ○ | ⊙ |
| 10 | ⊙ | ○ | ⊙ |
| 11 | ⊙ | ○ | ⊙ |
| 12 | ⊙ | ○ | ⊙ |
| 13 | ○ | ○ | ⊙ |
| 14 | ⊙ | ○ | ⊙ |
| 15 | ⊙ | ○ | ○ |
| 16 | ⊙ | ○ | ○ |
| 17 | ⊙ | ○ | ⊙ |
| 18 | ⊙ | ○ | ⊙ |
| 19 | ⊙ | ○ | ○ |
| Comparative Example 1 | ⊙ | × | × |
| 2 | ○ | ○ | ⊙ |
| 3 | ⊙ | ○ | ○ |
| 4 | × | - | - |
| 5 | ⊙ | × | × |
| 6 | × | ○ | ⊙ |
| 7 | ○ | × | × |
| 8 | × | × | × |

As apparent from the results of Tables 6, 7, 9, and 10, according to the present invention, it is possible to provide a concrete composition which simultaneously satisfies 1) to 3) below: 1) high fluidity; 2) little separation of materials such as aggregate; and 3) using of a one-component admixture with a water-reducing component having a correspondingly high solid content concentration and having high stability.

**Claims**

1. A concrete composition comprising: a binder; water; fine aggregate; coarse aggregate; and a one-component admixture,
   wherein a water/binder ratio is 30 to 70% by mass,
   a slump flow value is 35 to 75 cm, and

a one-component admixture is contained in a proportion of 0.5 to 3.0 parts by mass relative to 100 parts by mass of a binder,

the one-component admixture being a one-component admixture that contains a component A, a component B, a component C, and a component D and has an ionic strength, derived from the component A, of 0.02 to 0.8,

the component A being a polycarboxylic acid-based water reducing agent made up of a copolymer of an unsaturated monocarboxylic acid monomer and/or an unsaturated dicarboxylic acid monomer and/or salts of these monomers and an unsaturated monomer that is copolymerizable with these monomers and salts and has a polyoxyalkylene group composed of 1 to 300 oxyalkylene units having 2 to 4 carbon atoms in a molecule and/or a salt of the copolymer,

the component B being water-soluble cellulose ether,

the component C being gums,

the component D being a defoamer.

2. The concrete composition according to claim 1, wherein the one-component admixture contains the component A in a proportion of 15 to 50% by mass.

3. The concrete composition according to claim 1 or 2, wherein the one-component admixture has an ionic strength, derived from the component A, of 0.05 to less than 0.5.

4. The concrete composition according to any one of claims 1 to 3, wherein the component B is at least one selected from alkyl cellulose, hydroxyalkyl cellulose, and hydroxyalkyl alkyl cellulose.

5. The concrete composition according to any one of claims 1 to 4, wherein the component C is at least one selected from diutan gum, welan gum, xanthan gum, and gellan gum.

6. A method for preparing the concrete composition according to any one of claims 1 to 5, using a binder, water, fine aggregate, coarse aggregate, and a one-component admixture, wherein

a one-component admixture prepared by adding powdered gums and/or an aqueous solution of the gums as the component C is used when the ionic strength derived from the component A is less than 0.02 to 0.5, and

the one-component admixture prepared by adding the aqueous solution of the gums as the component C is used when the ionic strength derived from the component A is 0.5 to 0.8.

## INTERNATIONAL SEARCH REPORT

| International application No. |
| --- |
| PCT/JP2017/040217 |

**A. CLASSIFICATION OF SUBJECT MATTER**

Int.Cl. C04B28/02(2006.01)i, C04B24/26(2006.01)i, C04B24/38(2006.01)i

According to International Patent Classification (IPC) or to both national classification and IPC

**B. FIELDS SEARCHED**

Minimum documentation searched (classification system followed by classification symbols)

Int.Cl. C04B28/02, C04B24/26, C04B24/38

| Documentation searched other than minimum documentation to the extent that such documents are included in the fields searched | |
| --- | --- |
| Published examined utility model applications of Japan | 1922–1996 |
| Published unexamined utility model applications of Japan | 1971–2017 |
| Registered utility model specifications of Japan | 1996–2017 |
| Published registered utility model applications of Japan | 1994–2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-125254 A (TAIHEIYO MATERIALS CORPORATION) 11 July 2016, entire text (Family: none) | 1-6 |
| A | JP 9-20540 A (SHIN-ETSU CHEMICAL CO., LTD.) 21 January 1997, entire text (Family: none) | 1-6 |
| A | JP 2016-56081 A (SHIN-ETSU CHEMICAL CO., LTD.) 21 April 2016, entire text & US 2016/0009599 A1, whole documents & EP 2966049 A1 & CN 105314921 A & KR 10-2016-0007383 A & TW 201619268 A | 1-6 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 27 December 2017 (27.12.2017) | 16 January 2018 (16.01.2018) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10029849 A
- JP 4139047 A
- JP 2011509908 A
- JP 2008137889 A
- JP 2016056081 A